(19) Europäisches Patentamt
European Patent Office
Office européen des brevets

(11) **EP 2 977 394 A1**

(12) **EUROPÄISCHE PATENTANMELDUNG**

(43) Veröffentlichungstag:
**27.01.2016 Patentblatt 2016/04**

(21) Anmeldenummer: **14178600.4**

(22) Anmeldetag: **25.07.2014**

(51) Int Cl.:
**C08G 18/76** (2006.01)    **C08G 18/18** (2006.01)
**C08G 18/20** (2006.01)    **C08G 18/42** (2006.01)
**C08G 101/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
• **Bollmann, Heinrich**
 **49594 Alfhausen (DE)**
• **Strauss, Michael**
 **49448 Lemförde (DE)**
• **Poppenberg, Johannes**
 **49078 Osnabrück (DE)**
• **Tepper, Christina**
 **49448 Lemförde (DE)**

(54) **Mikrozelluläres Polyurethan auf der Basis von Polycaprolacton**

(57) Gegenstand der Erfindung ist mikrozelluläres Polyurethan hergestellt zumindest aus den Ausgangsstoffe Isocyanat, mit Isocyanat reaktiver Substanz und Wasser, wobei die mit Isocyanat reaktive Substanz Polycaprolacton ist, daraus hergestellte Formteile, deren Verwendung und Herstellungsverfahren.

EP 2 977 394 A1

**Beschreibung**

Gegenstand der vorliegenden Erfindung ist ein mikrozelluläres Polyurethan auf der Basis von Polycaprolacton, daraus hergestellt Formteile, deren Verwendung und zugehörige Herstellungsverfahren.

Elastomere auf der Basis von Polyisocyanat-Polyadditionsprodukten und ihre Herstellung sind allgemein bekannt und vielfältig beschrieben, beispielsweise in EP-A 62 835, EP-A 36 994, EP-A 250 969, DE-A 195 48 770 und DE-A 195 48 771, EP 1,379,568 B1.

Formteile aus mikrozellulärem Polyurethan werden häufig als Dämpfungselemente eingesetzt, wo sie jahrelang hohen mechanischen Beanspruchungen standhalten müssen und gleichzeitig gute Hydrolyseresistenz und Mikrobenbeständigkeit aufweisen sollen.

Daher ist ein ständiges Ziel der Forschung mikrozelluläre Polyurethane zu entwickeln, die neben den für diese Stoffklasse gefordertem hohem Anforderungsprofil hinsichtlich der Mechanik, hervorragende dynamische Eigenschaften, gute Kälteflexibilität weiterhin auch gute Hydrolyseresistenz, hohe Mikrobenbeständigkeit sowie hohe Wärmestabilität zeigen.

Überraschenderweise konnte diese Aufgabe mit dem Polyurethan gemäß Anspruch 1 gelöst werden. In einer Ausführungsform 1 ist der Erfindungsgegenstand daher ein mikrozelluläres Polyurethan hergestellt zumindest aus den Ausgangsstoffen Isocyanat, mit Isocyanat reaktiver Substanz und Wasser, bei dem die mit Isocyanat reaktive Substanz Polycaprolcaton ist.

Zellige Polyurethanelastomere sind allgemein bekannt, bevorzugt sind zellige Polyurethanelastomere mit einer Dichte nach DIN EN ISO 845 von $0,2 \times 10^3$ kg/m$^3$ bis $1,1 \times 10^3$ kg/m$^3$, bevorzugt $0,3 \times 10^3$ kg/m$^3$ bis $0,8 \times 10^3$ kg/m$^3$, bevorzugt mit einer Zugfestigkeit nach DIN EN ISO 1798 von mehr als 2 N/mm$^2$, bevorzugt 2 N/mm$^2$ bis 8 N/mm$^2$, einer Dehnung nach DIN EN ISO 1798 von mehr als 300 %, bevorzugt 300 % bis 700 % und einer Weiterreißfestigkeit nach DIN ISO 34, B (b) von mehr als 8 N/mm, bevorzugt 8 N/mm bis 25 N/mm in frage.

Bevorzugt sind mikrozellige Elastomere auf der Basis von Polyisocyanat-Polyadditionsprodukten mit einem Durchmesser der Zellen von 0,01 mm bis 0,5 mm, weiter bevorzugt 0,01 mm bis 0,15 mm.

Die erfindungsgemäßen zelligen Polyisocyanat-Polyadditionsprodukte weisen bevorzugt eine Glastemperatur kleiner -33°C, besonders bevorzugt kleiner -45° C eine Zugfestigkeit nach DIN EN ISO 1798 von $\geq 3,5$, bevorzugt $\geq 4$ N/mm2, eine Dehnung nach DIN EN ISO 1798 von $\geq 300$ %, bevorzugt $\geq 350$ % und eine Weiterreißfestigkeit nach DIN ISO 34, B (b) von $\geq 13$ N/mm und besonders bevorzugt einen Druckverformungsrest (bei 80°C) in Anlehnung an DIN EN ISO 1856 von kleiner 25 % auf.

Besonders bevorzugt besitzen die Elastomere die eingangs dargestellten physikalischen Eigenschaften.

Die Herstellung erfolgt durch Umsetzung von Isocyanat (a) mit gegenüber Isocyanaten reaktiven Verbindungen (b), erfindungsgemäß Polycaprolacton und Wasser (d). Die Elastomere auf der Basis von zelligen Polyisocyanat-Polyadditionsprodukten werden bevorzugt in einer Form hergestellt, in der man die reaktiven Ausgangskomponenten miteinander umsetzt.

Isocyanate sind bevorzugt organische Isocyanate (a), weiter bevorzugt sind aliphatische, cyc-loaliphatische, araliphatische und/oder aromatische Isocyanate, weiter bevorzugt Diioscyanate. Bevorzugte Diisocyanate sind Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat (IPDI), 1,4- und/oder 1,3-Bis(isocyanatomethyl)cyclohexan (HXDI), 1,4-Cyclohexan-diisocyanat, 1-Methyl-2,4-und/oder-2,6-cyclohexandiisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), o-Tolidine diisocyanate (TODI), 1,2-Diphenylethandiisocyanat und/oder Phenylendiisocyanat, 4,4'-, 2,4'- und 2,2'-Dicyclohexylmethan-diisocyanat (H12 MDI), 2,4-Paraphenylendiisocynat (PPDI), 2,4-Tetramethylenxylendiisocyant (TMXDI) bevorzugt 2,2'-, 2,4'- und/oder 4,4'-Diphenylmethandiisocyanat (MDI) und/oder 1,6-Hexamethylendiiso-cyanat (HDI).

Besonders bevorzugt ist 1,5-Naphthylendiisocyanat (NDI) und/oder o-Tolidinediisocyanate (TODI).

Das erfindungsgemäße Verfahren zur Herstellung der zelligen Polyisocyanat-Polyadditionsprodukte erfolgt bevorzugt indem in einem ein- oder zweistufigen Prozess die folgenden Ausgangsstoffe eingesetzt werden:

(a) Isocyanat,
(b) gegenüber Isocyanaten reaktive Verbindung,
(c) gegebenenfalls Hilfsstoff und/oder Zusatzstoff
(d) Wasser
(e) gegebenenfalls Katalysator,
(f) gegebenenfalls Treibmittel
(g) gegebenenfalls Kettenverlängerer.

Bevorzugt ist der zweistufige Prozess, bei dem in einem ersten Schritt die folgenden Ausgangsstoffe, auch Komponenten genannt, miteinander vermischt werden:

(a) Isocyanat,
(b) gegenüber Isocyanaten reaktiven Verbindung, erfindungsgemäß Polycaprolacton
(c) gegebenenfalls Hilfsstoff- und/oder Zusatzstoff
(e) gegebenenfalls Katalysator

wobei ein Präpolymer entsteht, das bevorzugt einen Isocyanat (NCO)-Gehalt von 2 % bis 8 %, weiter bevorzugt von 3 % bis 7 % hat. Die Bestimmung des Isocyanat-Gehaltes erfolgt gemäß Beispiel 1.
und im zweiten Schritt werden noch hinzugefügt

(d) Wasser
(e) gegebenenfalls Katalysator,
(f) gegebenenfalls Treibmittel
(g) gegebenenfalls Kettenverlängerer und/oder Vernetzer und
(c) gegebenenfalls Hilfs- und/oder Zusatzstoffe, sofern sie nicht oder nur teilweise im ersten Schritt zugegeben wurden
(e) gegebenenfalls Katalysator, sofern er nicht oder nur teilweise im ersten Schritt zugegeben wurde.

In bevorzugten Ausführungsformen werden bei der Herstellung der Polyisocyanat Polyadditi-onsprodukte übliche Treibmittel (f) verwendet werden. Bevorzugt sind dies niedrig siedende Flüssigkeiten, die unter dem Einfluss der exothermen Polyadditionsreaktion verdampfen. Besonders geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte, vorzugsweise fluorierte Kohlenwasserstoffe, wie z. B. Methyl-enchlorid und Dichlormonofluormethan, per- oder partiell fluorierte Kohlenwasserstoffe, wie z. B. Trifluormethan, Difluormethan, Difluorethan, Tetrafluorethan und Heptafluorpropan, Kohlenwasserstoffe, wie z. B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, bevorzugt z.B. Dimethylether, Diethylether und Furan, Carbonsäureester, bevorzugt z.B. Methyl- und Ethylformiat, Ketone, bevorzugt z. B. Aceton, und/oder fluorierte und/oder perfluorierte, tertiäre Alkylamine, bevorzugt z. B. Perfluor-dimethyl-iso-propylamin.
In anderen bevorzugten Ausführungsformen werden Gemische dieser niedrig siedenden Flüssigkeiten untereinander und/oder mit anderen substituierten oder unsubstituierten Kohlenwasserstoffen verwendet. Die zweckmäßigste Menge an niedrigsiedender Flüssigkeit zur Herstellung derartiger zellhaltiger elastischer Formkörper aus Harnstoffgruppen gebunden enthaltenden Elastomeren hängt von der Dichte ab, die man erreichen will, sowie von der Menge des bevorzugt mit verwendeten Wassers. Im allgemeinen liefern Mengen von 1 Gew.-,% bis 15 Gew.-%, vorzugsweise 2 Gew.-% bis 11 Gew.-%, bezogen auf die Einwaage der mit Isocyanat reaktiven Verbindung (b), zufriedenstellende Ergebnisse.
Besonders bevorzugt wird ausschließlich Wasser (d) als Treibmittel und Kettenverlängerer eingesetzt, wobei das zugesetzte Wasser unter Berücksichtigung der sonstigen Ausgangsstoffe in einer Menge verwendet wird, dass das NCO/OH-Verhältnis zwischen 0,85 und 1,30, besonders bevorzugt zwischen 0,95 und 1,20 liegt.
Da das Wasser sowohl als Vernetzer unter Bildung von Harnstoffgruppen als auch aufgrund der Reaktion mit Isocyanatgruppen unter Bildung von Kohlendioxid als Treibmittel fungiert, wird es getrennt von den gegebenenfalls weiteren Vernetzer und/oder Treibmitteln aufgeführt.
Die Kennzahl ist definiert durch das molare Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und gegebenenfalls Kettenverlängerer (c) sowie des Wassers (d). "Gegebenenfalls" heißt in diesem Zusammenhang, dass der Kettenverlängerer immer dann berücksichtigt wird, wenn er zugegeben ist. Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als Gruppen mit aktiven Wasserstoffatomen, z.B. OH-Gruppen, vor.
Die Wassermengen, die zweckmäßigerweise verwendet werden können, betragen 0,01 Gew.-%, bis 5 Gew.-%, vorzugsweise 0,3 Gew.-%, bis 3,0 Gew.-%, bezogen auf das Gewicht der mit Isocyanat reaktiven Verbindung, bevorzugt dem Polyacaprolacton (b).
Zur Beschleunigung der Reaktion der Ausgangsstoffe wird bei der Herstellung des mikrozellulären Polyurethans ein Katalysator zugesetzt. Dieser Katalysator wird bei dem zweistufigen Verfahren bei der Herstellung des Prepolymers und/oder bei der Umsetzung eines Prepolymers mit dem Wasser ein Katalysatoren (e) zugefügt. Der Katalysator (e) kann einzeln oder als Mischung mehrerer Katalysatoren vorliegen.

Vorzugsweise ist der Katalysator (e) eine metallorganische Verbindungen, wie Zinn-(II)-Salz von organischen Carbonsäuren, bevorzugt Zinn-(II)-dioctoat, Zinn-(II)-dilaurat, Dibutylzinndiacetat und Dibutylzinndilaurat, andere metallorganische Verbindungen sind Wismutsalze, bevorzugt Wismut(III)-neodecanoat, Wismut-2-etyhlhexanoat und Wismut-octanoat, oder der Katlaysator ist ein tertiäres Amin wie Tetra-methylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-) Butylpiperazin, N,N,N',N",N"-Pentamethyldiethylendiamin. Auch ähnliche Substanzen können als Katalysatoren verwendet werden.

Weitere bevorzugte Katalysatoren sind Amidine, bevorzugt z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, bevorzugt z.B. Tetramethylammoniumhydroxid.

Weiterhin bevorzugte Katalysatoren sind N-Methyl-N-dimethylaminoethylpiperazin und Pentamethyldiethylentriamin sowie aromatische Alkalicarboxylate,Alkalihydroxide, bevorzugt z.B. Natriumhydroxid, und Alkalialkoholate, bevorzugt z.B. Natriummethylat und Kaliumisopropylat, sowie Alkalisalze von langkettigen Fettsäuren mit 10 bis 20 C-Atomen und gegebenenfalls seitenständigen OH-Gruppen.

Ganz besonders bevorzugt wird als Katalysator N-Methyl-N-dimethylaminoethylpiperazin und Pentamethyldiethylentriamin oder eine Mischung aus N-Methyl-N-dimethylaminoethylpiperazin und Pentamethyldiethylentriamin verwendet.

Die Katalysatoren (d) werden bevorzugt in Mengen von 0,0001 Gew.-Teilen bis 0,1 Gew.-Teilen pro 100 Gew.-Teile der mit Isocyanten reakiven Verbindung (b), bevorzugt dem Polycaprolacton eingesetzt.

Bei dem zweistufigen Prozess wird der Katalysator (e) bevorzugt in Mengen von 0,001 Gew.-%, bis 0,5 Gew.-%, bezogen auf das Gewicht des Prepolymers eingesetzt.

Neben Katalysator (e) werden bevorzugt den Ausgangsstoffen (a) und (b), die gemeinsam mit dem Kettenverlängerer (g) auch Aufbaukomponenten genannt werden übliche Hilfsstoffe und/oder Zusatzstoffe (e) hinzugefügt. Hilfsstoffe und/oder Zusatzstoffe liegen als Einzelsubstanz oder als Mischung mindestens zweier Hilfsstoffe und/oder Zusatzstoffe vor. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher.

Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaueres Diethylamin, stearinsaures Diethanol-amin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organosiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Poly-oxyalkylen- und Fluoralkanresten als Seitengruppen. Die oberflächenaktiven Substanzen werden üblicherweise in Mengen von 0,01 Gew.-Teilen bis 5 Gew.-Teilen, bezogen auf 100 Gew.-Teile der mit Isocyanat reaktiven Substanz (b) angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate.

Als verstärkend wirkende Füllstoffe finden vorzugsweise Anwendung Fasern, beispielsweise Kohlefasern oder Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können.

Die anorganischen und organischen Füllstoffe können einzeln oder als Gemische verwendet werden und werden der Reaktionsmischung üblicherweise in Mengen von 0,5 Gew.-% bis 50 Gew.-%, vorzugsweise 1 Gew.-% bis 30 Gew.-% bezogen auf das Gewicht der Aufbaukomponenten (a) und (b) zugegeben.

Geeignete Flammschutzmittel sind beispielsweise Trikresylphosphat, Tris-(2-chlorethyl)phosphat, Tris-(2-chlorpropyl)- phosphat, Tris-(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumphosphaten und Melamin sowie gegebenenfalls Stärke und/oder Blähgraphit zum Flammfestmachen der erfindungsgemäß hergestellten zelligen PU-Elastomere verwendet werden. Im Allgemeinen hat es sich als zweckmäßig erwiesen, 5 Gew.-Teile bis 50 Gew.-Teile, vorzugsweise 5 Gew.-Teile bis 25 Gew.-Teile der genannten Flammschutzmittel oder -mischungen für jeweils 100 Gew.-Teile der Aufbaukomponenten (a) und (b) zu verwenden.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) und (b), eingesetzt werden.

Geeignete Oxidationsverzögerer und Wärmestabilisatoren, die den erfindungsgemäßen zelligen PU-Elastomeren zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Jodiden, sterisch gehinderte Phenole, Hydrochinone, sowie substituierte Verbindungen dieser Gruppen und Mischungen davon, die vorzugsweise in Konzentrationen bis zu 1 Gew.-% bezogen auf das Gewicht der Aufbaukomponenten (a) und (b), verwendet werden.

Beispiele für Hydrolyseschutzmittel sind verschiedene substituierte Carbodiimide, wie bevorzugt 2,2',6,6'-Tetraisopropyldiphenyl-carbodiimid oder Carbodiimide auf der Basis von 1,3-Bis-(1methyl-1-isocyanato-ethyl)-benzol wie sie beispielsweise in den Schriften DE 19821668 A1, US 6,184,410, DE 10004328 A1, US 6,730,807, EP 0 940 389 B1 oder US 5,498,747 beschrieben sind, die im allgemeinen in Mengen bis zu 4,0 Gew.-%, bevorzugt 1,5 Gew.-% bis 2,5 Gew.-% bezogen auf das Gewicht der Aufbaukomponenten (a) bis (c), eingesetzt werden.

Gleit- und Entformungsmittel, die in der Regel ebenfalls in Mengen bis zu 1 Gew.-%, bezogen auf das Gewicht der Aufbaukomponenten (a) und (b), zugesetzt werden, sind Stearinsäure, Stearylalkohol, Stearinsäureester und -amide sowie die Fettsäureester des Pentaerythrits.

Ferner können organische Farbstoffe, wie Nigrosin, Pigmente, wie z.B. Titandioxid, Cadmiumsulfid, Cadmiumsulfidselenid, Phthalocyanine, Ultramarinblau oder Ruß zugesetzt werden.

Zusätzlich zu den bereits beschriebenen gegenüber Isocyanaten reaktiven Komponenten können des weiteren Kettenverlängerer- und/oder Vernetzer (c) mit einem Molekulargewicht von kleiner 500 g/mol, bevorzugt 60 g/mol bis 499 g/mol eingesetzt werden. Bevorzugt sind diese ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerer und/oder Vernetzer. Von Vernetzer wird gesprochen, wenn mehr als zwei mit Isocyanat reaktive Gruppen in einem Molekül vorhanden sind.

Als Ketternverlängerer und/oder Vernetzungsmittel (g) werden bevorzugt Alkandiole mit 2 bis 12 Kohlenstoffatomen verwendet, bevorzugt mit 2, 4, oder 6 Kohlenstoffatomen, weiter bevorzugt Ethandiol, 1,3-Propandiol, 1,5-Pentandiol, 1,6-Hexandiol, 1,7-Heptandiol, 1,8-Octandiol, 1,9-Nonandiol, 1,10-Decandiol und vorzugsweise 1,4-Butandiol. Weitere bevorzugte Kettenverlängerungsmittel und/oder Vernetzungsmittel (c) sind Dialkylenglykole mit 4 bis 8 Kohlenstoffatomen, bevorzugt Diethylenglykol und Dipropylenglykol und/oder di-, tri oder tetrafunktionelle Polyoxyalkylenpolyole.

Weitere bevorzugte Kettenverlängerer und/oder Vernetzer sind verzweigtkettige und/oder ungesättigte Alkandiole mit bevorzugt nicht mehr als 12 Kohlenstoffatomen, bevorzugt 1,2-Propandiol, 2-Methyl-, 2,2-Dimethyl-propandiol-1,3, 2-Butyl-2-ethylpropandiol-1,3, Buten-2-diol-1,4 und Butin-2- diol-1,4, Diester der Terephthalsäure mit Glykolen mit 2 bis 4 Kohlenstoffato-men, bevorzugt Terephthalsäure-bis-ethylenglykol- oder -butandiol-1,4, Hydroxyalkylenether des Hydrochinons oder Resorcins, wie bevorzugt 1,4-Di-(β-hydroxyethyl)-hydrochinon oder 1,3-Di-(β-hydroxyethyl)-resorcin, Alkanolamine mit 2 bis 12 Kohlenstoffatomen, wie bevorzugt Ethanolamin, 2-Aminopropanol und 3-Amino- 2,2-dimethylpropanol, N-Alkyldi-alkanolamine, wie z.B. N-Methyl- und N-Ethyl-diethanolamin.

Als höherfunktionelle Vernetzer (c) sind beispielsweise und bevorzugt tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Weitere bevorzugte Kettenverlängerer und/oder Vernetzer sind alkylsubstituierte aromatische Polyamine mit Molekulargewichten vorzugsweise von 122 g/mol bis 400 g/mol, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der erfindungsgemäßen Formkörper werden bevorzugt die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenyl-methanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet.

Zur Erzielung spezieller mechanischer Eigenschaften werden bevorzugt auch die alkylsubstitu-ierten aromatischen Polyamine im Gemisch mit den vorgenannten niedermolekularen mehrwertigen Alkoholen, vorzugsweise zwei- und/oder dreiwertigen Alkoholen oder Dialkylenglykolen verwendet.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

In einer bevorzugten Ausführungsform 2, die alle Merkmale der Ausführungsform 1 enthält liegt das Molekulargewicht des Polycaprolactons zwischen $1,6 \times 10^3$ g/mol und $2,5 \times 10^3$ g/mol.

Eine weitere bevorzugte Ausführungsform 3 enthält alle Merkmale der Ausführungsform 1 oder 2 wobei das Isocyant Naphthylendiisocyanat ist.

Vorteile der erfindungsgemäßen Polyurethane, die in den Ausführungsformen 1, 2 und 3 auftreten bessere dynamische Eigenschaft, geringere Hydrolyse, verringerte Wasseraufnahme, verbesserte Kälteflexibilität, hohe Wärmestabilität bzw. geringe Kriechneigung bei hohen Temperaturen sowie guter Setzbetrag nach dynamische Prüfung.

Ein weiterer Erfindungsgegenstand II ist ein Formkörper, bevorzugt ein Dämpfungselement, ein Stoßdämpfer oder ein Anschlagpuffer, der aus einem Polyurethan gemäß einem der Ausführungsformen 1 bis 4 hergestellt sind.

Verwendung von einem Polyurethan gemäß der Ausführungsformen, 1, 2 oder 3 des Erfindungsgegenstandes I oder eines Formkörpers gemäß Erfindungsgegenstand II, der bevorzugt ein Dämpfungselement, ein Stoßdämpfer oder Anschlagpuffer ist, für den Fahrzeugbau, bevorzugt den Luftfahrzeugbau, Wasserfahrzeugbau oder Landfahrzeugbau, besonders bevorzugt für den Landfahrzeugbau, bevorzugt als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt..

Ein weiterer Erfindungsgegenstand III ist ein Verfahren 1 zur Herstellung von mikrozellularem Polyurethan gemäß einem der Ansprüche 1 bis 4 wobei die Ausgangsstoffe Isocyanat, die mit Isocyanat reaktive Substanz Polycaprolacton und Wasser zusammengebracht werden.

Die erfindungsgemäßen zelligen Polyisocyanat-Polyadditionsprodukte werden zweckmäßigerweise nach dem "one shot"-Verfahren mit Hilfe der Niederdruck-Technik oder insbesondere der bekannten Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweistufen-Verfahren zu arbeiten.

Bei dem bevorzugten zweistufigen Prozess wird zunächst ein NCO-gruppenhaltiges Prepolymer hergestellt. Dazu wird die Komponente (b) und gegebenenfalls (c) mit (a) im Überschuss üblicherweise bei Temperaturen von 80°C bis 160°C, vorzugsweise von 110°C bis 150°C, zur Reaktion gebracht, wobei ein Prepolymer entsteht. Die Reaktionszeit ist auf das Erreichen des theoretischen NCO-Gehaltes bemessen.

In einer anderen Ausführungsform wird in dem ersten Schritt zu dem Isocyant (a) und der mit Isocyanat reaktiven Verbindung (b) Hilfs- und/oder Zusatzstoffe zugegeben gegebenenfalls auch Katalysator (e).

Das Prepolymer wird in der zweiten Stufe mit Wasser (d) umgesetzt, wobei in bevorzugten Ausführungsformen weiterhin Katalysator (e), Treibmittel (f), Kettenverlängerer und/oder Vernetzer (g) Hilfs- und/oder Zusatzstoffe, sofern diese Komponenten nicht bereits vollständig in Schritt 1 zugegeben wurden.

Ein bevorzugtes Verfahren 2 zur Herstellung von Formteilen umfasst alle Merkmale des Verfahrens 1 wobei das mikrozelluläre Polyurethan in eine Form gegeben wird in der es aushärtet.

Als Formen, die das Negativ der Formteile sind, kommen hierbei allgemein übliche Formen in Frage, beispielsweise Metallformen, und die aufgrund ihrer Form und Zusammensetzung die erfindungsgemäße dreidimensionale Form der Formteile gewährleisten.

Die Oberflächentemperatur der Forminnenwand beträgt bevorzugt 40 °C bis 105 °C, weiter bevorzugt 50 °C bis 95 °CC. Die Herstellung der Formteile wird bevorzugt bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Formteile sind nach 5 Minuten bis 60 Minuten ausgehärtet und damit entformbar.

Die Menge des in die Form eingebrachten Reaktionsgemisches wird bevorzugt so bemessen, dass die erhaltenen Formkörper die bereits dargestellte Dichte aufweisen. Die Ausgangskomponenten werden üblicherweise mit einer Temperatur von 15 °C bis 120 °C, vorzugsweise von 30 °C bis 110 °C, in das Formwerkzeug eingebracht.

Zur Verbesserung der Entformung der Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Nach der Herstellung der Formteile in der Form werden die Formteile bevorzugt für eine Dauer von 1 bis 48 Stunden bei Temperaturen von 70 °C bis 140 °C getempert.

Die folgenden Beispiele sollen den Fachmann in die Lage versetzen eine Ausführungsform der Erfindung nachzuarbeiten, sie sind in keiner Weise einschränkend für den Umfang der Erfindung.

Beispiele:

1. Beispiel - Bestimmungsmethode für den NCO-Gehalt:

Lösungen:

Di-n-Hexylamin Lösung:

166,8 g Di-n-Hexylamin werden mit Xylol auf 1,0 L (im 1 L Messkolben) aufgefüllt und homogenisiert.

1%ige Bromphenolblau Lösung:

0,5g Bromphenolblau werden in 49,5g Ethanol aufgelöst und in eine Pipettenflasche umgefüllt.

Durchführung

Von der Aminlösung werden 10 ml in einen Erlenmeyerkolben abgefüllt. Anschließend werden 20 ml Chlorbenzol zugegeben. Bei einem erwarteten Isocyanatgehalt von 4 % werden 2 g - 2,5 g Prepolymer auf 0,1 mg genau eingewogen (die Einwaagen bei anderen Isocyanatkonzentrationen müssen entsprechend angepasst werden). Nach vollständigem Lösen (visuelle Kontrolle) werden 50 ml Methanol zugegeben. Das unverbrauchte Amin wird nun nach Zugabe von 3 Tropfen Bromphenolblau Lösung mit HCl (c= 1,0 mol/L) bis zum Farbumschlag von blau nach gelb zurücktitriert.

In der gleichen Weise - nur ohne Probeneinwaage - werden die Blindproben, d.h. Proben die kein Prepolymer enthalten, behandelt.

Berechnung

$$NCO \; frei = \frac{(VBW - V\mathrm{Pr}obe) * M * c * t}{m} * 100\%$$

V BW     Verbrauch HCl (1,0 mol/L) für Blindwert in L
V Probe   Verbrauch HCl (1,0 mol/L) für Probe in L
M        Molare Masse NCO 42,02 g/mol
c        Stoffmengenkonzentration HCl 1,0 mol/L
t        Titer HCl (1,0 mol/L)
m        Probeneinwaage Prepolymer in g

2. Beispiel - Herstellung eine Formkörpers

a. Herstellung eines Isocyanatgruppen aufweisenden Prepolymers

1000 Gew.-Teile (0,5 mol) eines Polycaprolactons mit einem durchschnittlichen Molekulargewicht von 2000 g/mol wurden auf 140°C erwärmt und bei dieser Temperatur mit 240 Gew.-Teilen (1,14 mol) festem 1,5-Napthylendiisocyanate (NDI) unter intensivem Rühren versetzt.

Man erhielt ein Prepolymer mit einem NCO-Gehalt von 4,12 Gew.-% und einer Viskosität bei 90°C von 2900 mPas (gemessen mit einem Rotationsviskosimeter der Firma Rheometrics Scientific).

b. Herstellung zelliger Formkörper

Vernetzerkomponente:

| | |
|---|---|
| 32,7 | Gew.-Teilen einer 50%igen wässrigen Lösung eines Fettsäuresulfonats |
| 16,4 | Gew.-Teilen Wasser |
| 28 | Gew.-Teilen eines Carbodiimids basierend auf 1,3-Bis(1-isocyanato-1-methyl-ethyl)benzol (TMXDI) |
| 18,1 | Gew.-Teilen eines Fettsäurepolyglykolesters |
| 4,2 | Gew.-Teilen eines Gemisches von Fettsäurepolyglycolestern und Aminsalzen von Alkylbenzolsulfonaten |
| 0,6 | Gew.-Teilen einer Mischung aus: |
| | 30 Gew.-% Pentamethyl-diethylentriamin und |
| | 70 Gew.-% N-Methyl-N'-(dimethylaminoethyl)-piperazin |

100 Gew.-Teile des auf 90°C temperierten isocyanatgruppenhaltigen Prepolymers (a) wurden mit 2,52 Gewichtsteilen der auf 50°C temperierten Vernetzerkomponente ca. 10 Sekunden lang intensiv gerührt. Die Reaktionsmischung wurde danach in ein auf 90°C temperiertes, verschließbares, metallisches Formwerkzeug eingefüllt, das Formwerkzeug verschlossen und die Reaktionsmischung aushärten gelassen. Nach 30 Minuten wurde der mikrozelluläre Formkörper entformt und zur thermischen Nachhärtung bei 110°C 16 Stunden getempert.

**Patentansprüche**

1. Mikrozelluläres Polyurethan hergestellt zumindest aus den Ausgangsstoffe Isocyanat, mit Isocyanat reaktiver Substanz und Wasser,
   **dadurch gekennzeichnet, dass**
   die mit Isocyanat reaktive Substanz Polycaprolacton ist.

2. Polyurethan nach Anspruch 1,
   **dadurch gekennzeichnet, dass**
   das Molekulargewicht des Polycaprolactons zwischen $1,6 \times 10^3$ g/mol und $2,5 \times 10^{*3}$ g/mol beträgt.

3. Polyurethan nach einem der vorhergehenden Ansprüche,
   **dadurch gekennzeichnet, dass**
   das Isocyant Naphthylendiisocyanat (NDI) und/oder o-Tolidinediisocyanate (TODI) ist.

4. Polyurethan nach einem der vorhergehenden Ansprüche
   **dadurch gekennzeichnet, dass**
   der Katalysator N-Methyl-N-dimethylaminoethylpiperazin und Pentamethyldiethylentriamin oder eine Mischung aus N-Methyl-N-dimethylaminoethylpiperazin und Pentamethyldiethylentriamin ist.

5. Polyurethan nach einem der vorhergehenden Ansprüche
   **dadurch gekennzeichnet, dass**
   2,2',6,6'-Tetraisopropyldiphenyl-carbodiimid oder Carbodiimide auf der Basis von 1,3-Bis-(1-methyl-1-isocyanato-ethyl)-benzol weiterer Ausgangsstoff ist.

6. Formkörper, bevorzugt Dämpfungselement, Stoßdämpfer oder Anschlagpuffer,
   **dadurch gekennzeichnet, dass**
   er aus einem Polyurethan nach einem der Ansprüche 1 bis 5 hergestellt ist.

7. Verwendung von einem Polyurethan und/oder Anschlagpuffer nach einem der vorhergehenden Ansprüche für den Fahrzeugbau, bevorzugt den Luftfahrzeugbau, Wasserfahrzeugbau oder Landfahrzeugbau, besonders bevorzugt für den Landfahrzeugbau.

8. Verfahren zur Herstellung von mikrozellulärem Polyurethan gemäß einem der Ansprüche 1 bis 5, **dadurch gekenn-**

**zeichnet, dass**
zumindest die Ausgangsstoffe Isocyanat, die mit Isocyanat reaktive Substanz Polycaprolacton und Wasser zusammengebracht werden.

9. Verfahren nach Anspruch 8,
**dadurch gekennzeichnet, dass**
in einem ersten Schritt die folgenden Ausgangsstoffe miteinander vermischt werden:

(a) Isocyanat,
(b) gegenüber Isocyanaten reaktiven Verbindung, erfindungsgemäß Polycaprolacton
(c) gegebenenfalls Hilfsstoff- und/oder Zusatzstoff
(e) gegebenenfalls Katalysator

wobei ein Präpolymer entsteht, das bevorzugt einen NCO Gehalt von 2 % bis 8 %, weiter bevorzugt von 3 % bis 7 % hat.
und in einem zweiten Schritt noch hinzugefügt und vermischt werden:

(d) Wasser
(e) gegebenenfalls Katalysator,
(f) gegebenenfalls Treibmittel
(g) gegebenenfalls Kettenverlängerer und/oder Vernetzer und
(c) gegebenenfalls Hilfs- und/oder Zusatzstoffe, sofern sie nicht oder nur teilweise im ersten Schritt zugegeben wurden
(e) gegebenenfalls Katalysator, sofern er nicht oder nur teilweise im ersten Schritt zugegeben wurde.

10. Verfahren zur Herstellung von Formteilen;
**dadurch gekennzeichnet, dass**
das gemäß Anspruch 8 oder 9 hergestellt mikrozelluläre Polyurethan in eine Form gegeben wird in der es aushärtet.

Europäisches
Patentamt

European
Patent Office

Office européen
des brevets

**EUROPÄISCHER RECHERCHENBERICHT**

Nummer der Anmeldung

EP 14 17 8600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/100633 A1 (SKC CO LTD [KR])<br>4. Juli 2013 (2013-07-04)<br>* Seite 1, Zeile 11 - Seite 5, Zeile 15 *<br>* Seite 6, Zeilen 1-22 *<br>* Seite 7, Zeilen 16-22 *<br>* Seite 9, Zeile 14 - Seite 10, Zeile 1 *<br>* Seiten 13-17; Beispiele 1-4; Tabellen 1,2 *<br>----- | 1-10 | INV.<br>C08G18/76<br>C08G18/18<br>C08G18/20<br>C08G18/42<br><br>ADD.<br>C08G101/00 |
| X | DE 16 94 029 A1 (ELASTOMER AG)<br>15. Juli 1971 (1971-07-15)<br>* Seiten 2-5; Beispiele 1,3 *<br>* Ansprüche 1-3 *<br>* Seite 1, Absatz 2 *<br>----- | 1-10 | |
| X | DE 10 2007 054983 A1 (BAYER MATERIALSCIENCE AG [DE])<br>20. Mai 2009 (2009-05-20)<br>* Absätze [0001], [0007] - [0010], [0024] - [0033] *<br>* Absätze [0034] - [0035]; Tabelle 1 *<br>----- | 1-10 | |
| X<br>A | US 4 647 596 A (ISHII SEIJI [JP] ET AL)<br>3. März 1987 (1987-03-03)<br>* Spalte 1, Zeilen 5-17 *<br>* Spalte 7, Zeile 51 - Spalte 9, Zeile 13; Beispiel Vergleich 4 *<br>----- | 1,2,6-10<br><br>3-5 | RECHERCHIERTE SACHGEBIETE (IPC)<br>C08G<br>C08J |

Der vorliegende Recherchenbericht wurde für alle Patentansprüche erstellt

| Recherchenort | Abschlußdatum der Recherche | Prüfer |
|---|---|---|
| München | 9. Januar 2015 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 8600

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2015

| Im Recherchenbericht angeführtes Patentdokument | Datum der Veröffentlichung | Mitglied(er) der Patentfamilie | Datum der Veröffentlichung |
|---|---|---|---|
| WO 2013100633 A1 | 04-07-2013 | CN 104024298 A<br>EP 2797975 A1<br>KR 20130075413 A<br>US 2014374976 A1<br>WO 2013100633 A1 | 03-09-2014<br>05-11-2014<br>05-07-2013<br>25-12-2014<br>04-07-2013 |
| DE 1694029 A1 | 15-07-1971 | DE 1694029 A1<br>GB 1207183 A | 15-07-1971<br>30-09-1970 |
| DE 102007054983 A1 | 20-05-2009 | CA 2705979 A1<br>CN 101861346 A<br>DE 102007054983 A1<br>EP 2212363 A1<br>JP 2011506624 A<br>KR 20100102587 A<br>TW 200940580 A<br>US 2009127921 A1<br>WO 2009062672 A1 | 22-05-2009<br>13-10-2010<br>20-05-2009<br>04-08-2010<br>03-03-2011<br>24-09-2010<br>01-10-2009<br>21-05-2009<br>22-05-2009 |
| US 4647596 A | 03-03-1987 | DE 3613961 A1<br>JP S61250019 A<br>US 4647596 A | 30-10-1986<br>07-11-1986<br>03-03-1987 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 62835 A
- EP 36994 A
- EP 250969 A
- DE 19548770 A
- DE 19548771 A
- EP 1379568 B1
- DE 19821668 A1
- US 6184410 B
- DE 10004328 A1
- US 6730807 B
- EP 0940389 B1
- US 5498747 A

**In der Beschreibung aufgeführte Nicht-Patentliteratur**

- Plastics Additive Handbook. Hanser Publishers, 2001, S.98-S136
- Plastics Additive Handbook. Hanser Publishers, 2001